(19)

**Europäisches Patentamt**
**European Patent Office**
**Office européen des brevets**

(11) **EP 4 702 847 A1**

(12) **EUROPEAN PATENT APPLICATION**

(43) Date of publication:
04.03.2026 Bulletin 2026/10

(21) Application number: 24196767.8

(22) Date of filing: 27.08.2024

(51) International Patent Classification (IPC):
*A23G 9/32* $^{(2006.01)}$     *A23G 9/42* $^{(2006.01)}$

(52) Cooperative Patent Classification (CPC):
**A23G 9/327; A23G 9/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MAGNUM IP HOLDINGS B.V.
1017 BM Amsterdam (NL)**

(72) Inventor: **The designation of the inventor has not
yet been filed**

(74) Representative: **Potter Clarkson
Chapel Quarter
Mount Street
Nottingham NG1 6HQ (GB)**

(54) **FROZEN CONFECTION**

(57)    A frozen aerated confection comprising water and a fat component, wherein the fat component is present in an amount of from 1 to 15 wt%, and wherein the fat component comprises i) a fat blend having a triglyceride composition of from 30 to 80% saturated fatty acids, less than 30% polyunsaturated fatty acids and the remainder being monounsaturated fatty acids, and ii) a wax ester.

EP 4 702 847 A1

## Description

## Technical Field of the Invention

The present invention relates to frozen aerated confections, such as ice cream, that are low in saturated fat and have good structural and organoleptic properties.

## Background to the Invention

Frozen aerated confections, such as ice creams, sorbets and the like are popular foodstuffs. Fat is an important constituent of such confections, and provides essential structural properties to the product as well as contributing to desirable mouthfeel when eaten. Historically, saturated fats have been preferred for such products due to their high melting points, which provides a solid microstructure during aeration and ensures the confections are mostly solid during freezing. Popular examples of such fats include dairy fat and coconut oil.

There has however, been a move towards a reduction in the amount of saturated fat in frozen confection products, mainly driven by a desire to improve the health profile of such confections. This has mainly involved the replacement of saturated fats with mono- or polyunsaturated fats. However, such fats have lower melting points, and are often liquid at room temperature. Simply replacing saturated fats with mono- or polyunsaturated fats is therefore not practical, as it results in unacceptable microstructure, impeding aeration and having undesirable structural properties.

US 2008/0220141 A1 discloses a frozen confection, wherein a fat blend is provided that comprises less than 65% saturated fat and greater than 20% and less than 35% polyunsaturated fat.

US 2008/0206425 S1 discloses an ice cream comprising palm oil with a fat content of <55% saturated fat, and as low as 35%.

Botega et al "The Potential Application of Rice Bran Wax Oleogel to replace Solid Fat and Enhance Unsaturated Fat Content in Ice Cream", J. Food Sci. 78, nr 9 2013 pp C1334-C1339 discloses a blend of high oleic sunflower oil (90wt%) with rice bran wax (10wt%) and showed that a stable blend can be produced and that the wax emulsified into the fat, however no practical frozen confection embodiments are disclosed, and did not assist with delaying structural collapse during melting of a test ice cream.

CN 106561966 A discloses an ice cream with zero trans fats and low saturated fat content wherein the fat component comprises plant oil (e.g. soybean oil, rapeseed oil, sunflower oil, groundnut oil, corn oil or rice bran oil) and from 6 to 10 wt% wax ester. Such plant oils have a saturated fat content of less than 25%.

Further improvements in this area are therefore desirable.

## Summary of the invention

The present invention relates to a frozen aerated confection comprising water and a fat component, wherein the fat component is present in an amount of from 1 to 15 wt%, and wherein the fat component comprises i) a fat blend having a triglyceride composition of from 30 to 80% saturated fatty acids, less than 30% polyunsaturated fatty acids and the remainder being monounsaturated fatty acids, and ii) a wax ester.

It has been found that a fat component that has a moderate level of saturated fat but is low in polyunsaturated fat and instead comprises a moderate level of monounsaturated fat when blended with a wax ester (typically only a small amount) provides a combination of good structuring properties, particularly stability during thermal cycling, without a waxy mouthfeel.

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 7th Edition R.T. Marshall, H.D. Goff and R.W. Hartel, Kluwer Academic / Plenum Publishers, New York 2013.

Frozen confection means a confection made by freezing a pasteurised mix of ingredients such as water, fat, sweetener, protein, and optionally other ingredients such as emulsifiers, stabilisers, colours and flavours. Frozen confections may be aerated. Frozen confections include ice cream, frozen yoghurt and the like. Preferably the frozen confection is an ice cream. Although the terms "ice cream" and "frozen yoghurt" are suggestive that they contain dairy ingredients, in the context of the present invention a confection comprising no dairy ingredients may still be described as an ice cream or frozen yoghurt.

The frozen aerated confection comprises the fat component in an amount of from 1 to 15 wt%. The frozen aerated confection comprises the fat component in an amount of at least 1 wt%, preferably at least 2 wt%, at least 3 wt%, or even at least 4 wt%. The frozen aerated confection comprises the fat component in an amount of no more than 15 wt%, preferably no more than 12 wt%, or even no more than 10 wt%. A preferred range is from 2 to 10 wt%.

The fat component comprises the fat blend and wax ester. Preferably, the fat component comprises from 90 wt% to 99.9 wt% of the fat blend.

Wax Ester

A wax ester is an ester made up of a long chain fatty component and a long chain alcohol component. The result is a hard waxy material that is solid at room temperature. It has been found that such materials, when incorporated into the fat composition of the present invention at suitable levels, surprisingly do not produce a negative waxy mouthfeel. Furthermore, they provide beneficial structuring properties, particularly aerated thermal stability and shaping properties. A suitable wax ester comprises a C20 to C36 fatty alcohol chain and a C20 to C26 fatty acid chain. Preferably the wax ester is rice bran wax.

Preferably the fat component comprises from 0.1 wt% to 10 wt% wax ester preferably from 0.5 to 7 wt%, more preferably from 1 to 5 wt%, most preferably from 1.5 to 4.0 wt%.

Fat Blend

Fats are largely made up of triglycerides (approximately 98%), together with minor amounts of other components such as phospholipids and diglycerides. Triglycerides are esters of glycerol with three fatty acids. Fatty acids which have no carbon-carbon double bonds are said to be saturated (SAFA), whereas fatty acids that contain one carbon-carbon double bond is said to be mono-unsaturated (MUFA) and multiple carbon-carbon double bonds are referred to as polyunsaturated (PUFA). Fats that are liquid at room temperature are often referred to as 'oils', but are considered to be fats for the purpose of the present invention. SAFA, MUFA and PUFA contents of fats and oils are given in "The Lipid Handbook", Third Edition, Frank D Gunstone, John L Harwood and Albert Dijkstra, CRC Press 2007.

Fats may be obtained from any suitable food-grade source. Fats may have a dairy or a non-dairy origin.

Due to concerns regarding sustainability, it is preferred that the fat component is substantially free of palm oil.

Preferably the fat blend comprises less than 25% polyunsaturated fatty acids (PUFA), preferably less than 20% polyunsaturated fatty acids (PUFA). Preferably the fat blend comprises at least 5% polyunsaturated fatty acids (PUFA), more preferably at least 10% polyunsaturated fatty acids (PUFA).

Preferably the fat blend comprises from 40 to 70% saturated fatty acids (SAFA).

Preferably the fat blend comprises at least 15% monounsaturated fatty acids (MUFA), preferably at least 20%. Preferably the fat blend comprises less than 40% monounsaturated fatty acids (MUFA), more preferably less than 30% monounsaturated fatty acids (MUFA).

An excellent source of saturated fat is coconut oil. Thus, preferably the fat blend comprises at least 20wt% coconut oil, preferably at least 30wt%, more preferably at least 40 wt%.

An excellent source of monounsaturated fat is rice bran oil. Thus, preferably the fat component comprises at least 20 wt% rice bran oil, preferably at least 30 wt%, more preferably at least 40 wt%.

Triglycerides may also be individually characterised by the number of fatty acids that are saturated (S) or unsaturated (U), by the terms SSS (triglycerides with three saturated fatty acids), SSU (triglycerides with one unsaturated fatty acid), SUU (triglycerides with two unsaturated fatty acids) and UUU (triglycerides with three unsaturated fatty acids).

The triglyceride composition (in terms of SSS, SSU, SUU and UUU) is determined using an Agilent 6890+ gas chromatography system with automated on-column injection onto a capillary column with flame ionization detection and oven track injection mode. A Qudarex 15 m, 0.25 mm internal diameter, 0.1 $\mu$m film 65% phenyl-methyl silicone gas chromatography column is used. Fats are dissolved in iso-octane art a concentration of around 0.3 mg/mL (0.25-0.50 mg/mL) and a volume of 0.1 $\mu$L is injected using the Agilent nano adaptor set to ON with 1 $\mu$L volume setting. The carrier gas is helium, at a constant flow of 1 ml/min (initial linear velocity is ~30 cm/s). The oven program is as follows: hold at 80°C for 0.5 minutes, ramp up to 330°C at 50°C/minute, triglyceride separation from 330 to 350°C ramping at 1°C/minute.

Calibration is by reference to a standard triglyceride carbon number data, which is acquired using a Quadrex 10 m 0.53 mm internal diameter 0.1 $\mu$m film methyl-5%phenyl capillary gas chromatography column. The column is fitted into a Perkin Elmer AutoXL system with a programmable temperature vaporising injector configured in direct on-column mode. The oven program is ramp from 200°C to 325°C at 10°C/minute, and then from 325°C to 355°C at 5°C/minute. The carrier gas is helium at typically 40 kPa.

Long chain SSS triglycerides are SSS triglycerides where the sum of the acyl chain lengths of the three saturated fatty acids is greater than 46 carbon atoms. Long chain SSS triglycerides melt at relatively high temperatures, above the temperature of the mouth.

It has been surprisingly found that such long chain SSS triglycerides do not provide an undesirable mouthfeel, provided they are included at moderate levels. Coconut oil is an excellent source of such SSS triglycerides. Thus preferably the fat component comprises at least 8wt% by weight of the triglycerides of long chain SSS triglycerides, preferably from 8 to 15wt%.

The frozen aerated confection typically comprises from 1 wt% to 10 wt% protein, or even from 2 wt% to 8 wt% protein. Protein may originate from a dairy or non-dairy source. Examples of proteins are described on pages 60 to 65 of "Ice Cream" (7th Edition, 2013) by Goff & Hartel (ISBN 978-1-4614-6095-4).

In one embodiment, the frozen aerated confection preferably comprises plant protein. The plant protein is preferably pulse protein, cereal protein, or a mixture thereof. The plant protein is preferably selected from: bean protein, lentil protein, lupin protein, pea protein, soy protein, oat protein, wheat protein, rye protein, barley protein, rice protein, buckwheat protein, millet protein, and mixtures thereof. It is particularly preferred that the plant protein comprises pulse protein. The plant protein may additionally comprise cereal protein as well as pulse protein. Where the plant protein is pulse protein, it is preferably selected from: bean protein, lentil protein, lupin protein, pea protein, soy protein, and mixtures thereof. For example, the pulse protein may comprise pea protein, soy protein, or a mixture thereof. It is particularly preferred that the pulse protein is pea protein. Where the plant protein is cereal protein, it is preferably selected from oat protein, wheat protein, rye protein, barley protein, rice protein, buckwheat protein, millet protein, and mixtures thereof.

The frozen aerated confection typically comprises at most 30 wt% of total sugars. Sugars include mono- and di-saccharides (such as sucrose, fructose, glucose and lactose). The total sugar content of the frozen confection is the sum of all of the digestible mono- and di-saccharides present in the frozen confection. The frozen confection preferably comprises at most 30 wt%, at most 25 wt%, or even at most 20 wt% total sugars. The frozen confection preferably comprises at least 5 wt%, at least 10 wt%, or even at least 15 wt% total sugars.

Emulsifiers

Frozen confections according to the present invention preferably comprise at least one emulsifier. Emulsifiers provide beneficial structuring properties, allowing greater control of the physical properties of the frozen confection. Additionally they can provide beneficial organoleptic benefits such as mouthfeel and creaminess. Examples of emulsifiers, together with their characteristics are described on pages 82 to 84 of "Ice Cream" (7th Edition, 2013) by Goff & Hartel (ISBN 978-1-4614-6095-4). Emulsifiers are typically mono- and diglycerides (E471), polysorbate 80 (E433), or egg yolk. The frozen aerated confection preferably comprises from 0.01 wt% to 0.5 wt% emulsifier, from 0.05 wt% to 0.4 wt% emulsifier, or even from 0.1 wt% to 0.3 wt% emulsifier.

Stabilisers

The frozen confection further typically contains stabilisers, the primary purposes of which is to produce smoothness in body and texture, retard or reduce ice crystal growth during storage, and to provide uniformity of product and resistance to melting. Additionally, they slow down moisture migration from the product to the package or the air. The action of stabilisers in ice cream results from their ability to form gel-like structures in water and to hold free water. Iciness can be controlled by stabilizers due to a reduction in the growth of ice crystals over time, related to a reduction in water mobility as water is entrapped by their entangled network structures in the serum phase.

Examples of stabilizers, together with their characteristics are described on pages 75 to 82 of "Ice Cream" (7th Edition, 2013) by Goff & Hartel (ISBN 978-1-4614-6095-4). Suitable stabilizers include one or more of tara gum, guar gum, locust been gum, carrageenan, gelatin, alginate, carboxymethyl cellulose, xanthan, and pectin. The frozen aerated confection preferably 15 comprises from 0.01 wt% to 0.6 wt% stabilizer, from 0.05 wt% to 0.5 wt% stabilizer, or even from 0.1 wt% to 0.4 wt% stabilizer.

The frozen aerated confection preferably comprises 20 wt% to 60 wt% total solids, more preferably 25 wt% to 50 wt%, or even 30 wt% to 45 wt%. Total solids is the sum of all of 20 the ingredients other than water. A method for measuring total solids is set out on page 406 of "Ice Cream" (7th Edition, 2013) by Goff & Hartel (ISBN 978-1-4614-6095-4).

Other ingredients

The frozen confection may include other macro ingredients, sometimes called inclusions, that generally do not form an intimate mixture with the other ingredients but provide texture, taste and colour variation and interest to the confection.

Suitable examples of inclusions might include sugar-based viscous liquids such as syrups, caramels or honey. Inclusions might also include solid particulate material, such as chocolate, toffee, frozen or caramelised fruits, biscuit, cake. However, preferably the inclusions comprise cereal grains, e.g. whole grains, especially oat grains which could for example be in the form of granola.

Such inclusions might comprise from 5 to 20 wt% of the confection.

Product form

Preferably the product comprises at least 30g, more preferably at least 40g, more preferably still at least 50g, yet more preferably at least 60g, yet more preferably still at least 70g, even more preferably at least 80g, more preferably at least 100g, yet more preferably at least 125g, still more preferably at least 150g, even more preferably at least 200g frozen confection. Preferably the product comprises at most 500g, more preferably at most 350g, more preferably still at most 300g, still more preferably at most 250g, most preferably at most 225g frozen confection.

The frozen confection of the present invention may be aerated. The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, %overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

The amount of overrun present in the product will vary depending on the desired product characteristics. In the context of the present invention the level of overrun is typically from 0 to 150%, preferably from 60 to 150%, more preferably from 60 to 100%.

The manufacture of frozen aerated confections is well known to the skilled person, and is described in detail in Chapter 4 of "The Science of Ice Cream" (2nd Edition, 2012) by Clarke (ISBN 978-1-84973-127-0). For example, a suitable process comprises the following steps: combining all ingredients except the fat component with water, and mixing to form an aqueous phase; adding the fat component to the aqueous phase of step (a), and mixing to form a premix; homogenization and pasteurization of the premix; ageing; freezing and aeration; extrusion; and optionally deep freezing.

Premix means the frozen confection composition comprising all ingredients that have been mixed prior to step (c); i.e. prior to homogenization. The homogenization pressure is preferably from 200 to 400 bar, for example from 200 to 300 bar.

Unless otherwise specified, numerical ranges expressed in the format "from x to y" are understood to include x and y. In specifying any range of values or amounts, any particular upper value or amount can be associated with any particular lower value or amount.

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

The invention will now be illustrated, by way of example, and with reference to the following examples.

**Examples**

Frozen confections were prepared with the formulation shown in Table 1.

Table 1: Ice cream formulation

| Ingredient | Amount (wt%) |
|---|---|
| Fat Component (see Table 2) | 5 |
| Pea Protein | 1 |
| Sugars (sucrose, fructose, dextrose) | 21.65 |
| Glucose syrup (DE28) | 4 |
| Stabilizer | 0.3 |
| Emulsifier | 0.2 |
| Flavours | 0.35 |
| Water | To 100 |

Briefly, the ingredients (excluding the fat component) were combined and mixed with heating (60°C to 75°C), followed by addition of the fat component and further mixing. The mixes were pasteurised and homogenised, and then aged for 24 hours at 4°C.

After the ageing step, the mixes were aerated in a scraped surface heat exchanger (standard ice cream freezer). The air input was controlled to give a target overrun of 120%, and freezing was controlled to give a target extrusion temperature of -6°C.

The composition of the fat component was varied as shown in Table 2. The SAFA, MUFA and PUFA contents were calculated with reference to "The Lipid Handbook" (3rd Edition, 2007) by Gunstone, Harwood & Dijkstra (ISBN 978-0-8493-9688-5).

The fat component was varied as follows and set out in table 2 below, together with the triglyceride profile of the fat.

Table 2: Composition of fat component

| Example | Coconut Oil (wt%) | Rice Bran Oil (wt%) | Rice Bran Wax (wt%) | SAFA | MUFA | PUFA |
|---|---|---|---|---|---|---|
| A | 100 | - | - | 92 | 6 | 2 |
| B | - | 95 | 5 | 25 | 38 | 37 |
| 1 | 50 | 47.5 | 2.5 | 59.5 | 21.5 | 19 |

Examples A and B are comparative whilst example 1 is according to the present invention.

Comparative example A comprises a 100% coconut oil (i.e. the frozen confection contained 5 wt% coconut oil). Comparative example B comprises a fat component comprising 95 wt% fat and 5 wt% wax ester (i.e. the frozen confection comprises 4.75 wt% rice bran oil and 0.25 wt% rice bran wax). Sample 1 (according to the invention) comprises a fat component comprising 50 wt% coconut oil, 47.5 wt% rice bran oil and 2.5 wt% rice bran wax (i.e. the frozen confection contained 2.5 wt% coconut oil, 2.375 wt% rice bran oil and 0.125 wt% rice bran wax.

The quantity of long chain SSS triglycerides in example 1 is 8.5%.

Meltdown stability

The mass of frozen aerated confection that was lost due to melting was measured over time. Briefly, samples (-300 g portions) were placed on a stainless steel mesh in a temperature-controlled chamber (at 23°C) and allowed to melt for up to 240 minutes. The melted sample that passed through the mesh was weighed.

Samples of the ice creams were subjected to fluctuating temperature cycling conditions in a programmable environmental test chamber for 2 weeks (temperature conditions fluctuate between -20°C and +10°C). Samples subject to this treatment (designated A*, B* and 1*) are representative of in-market quality of the product after transportation and retail. At the end of the 2 week period, the meltdown stability test outlined above was carried out for these samples. The results are summarised in Table 3.

Table 3: Mass loss (wt%) vs time (min)

| Time (min) | Sample | | | | | |
|---|---|---|---|---|---|---|
| | A | A* | B | B* | 1 | 1* |
| 30 | 0 | 0.32 | 0.04 | 0.26 | 0 | 0 |
| 60 | 0.58 | 3.35 | 0.64 | 2.97 | 0.06 | 0.16 |
| 90 | 1.82 | 7.11 | 3.05 | 9.48 | 0.11 | 1.25 |
| 120 | 3.39 | 10.07 | 6.16 | 14.96 | 0.66 | 3.16 |

The results show that even after being subjected to fluctuating temperature cycling conditions for 2 weeks, the samples according to the invention still retain excellent meltdown stability. It is remarkable that after being allowed to melt for 60 minutes, the mass loss was less than 5 wt%, and even after being allowed to melt for 120 minutes, the mass loss remained below 10 wt%.

## Claims

1. A frozen aerated confection comprising water and a fat component, wherein the fat component is present in an amount of from 1 to 15 wt%, and wherein the fat component comprises i) a fat blend having a triglyceride composition of from 30 to 80% saturated fatty acids, less than 30% polyunsaturated fatty acids and the remainder being monounsaturated fatty acids, and ii) a wax ester.

2. A frozen confection according to claim 1, wherein the fat component is present in an amount of from 2 to 10 wt%.

3. A frozen aerated confection according to any one of the preceding claims, wherein the fat component comprises the fat blend in an amount of from 90 to 99.9 wt%.

4. A frozen aerated confection according to claim 1 or claim 2, wherein the fat component comprises the wax ester in an amount of from 0.1 to 10 wt%, preferably from 0.5 to 7 wt%, more preferably from 1 to 5 wt%, most preferably from 1.5 to 4.0 wt%.

5. A frozen confection according to any one of the preceding claims, wherein the wax ester comprises a C20 to C36 fatty alcohol chain and a C20 to C26 fatty acid chain.

6. A frozen confection according to any one of the preceding claims, wherein the wax ester is rice bran wax.

7. A frozen confection according to any one of the preceding claims, wherein the fat component is substantially free of palm oil.

8. A frozen confection according to any one of the preceding claims, wherein the fat blend comprises less than 25% polyunsaturated fatty acids, preferably less than 20% polyunsaturated fatty acids.

9. A frozen confection according to any one of the preceding claims, wherein the fat blend comprises from 40 to 70% saturated fatty acids.

10. A frozen confection according to any one of the preceding claims, wherein the fat blend comprises at least 15% monounsaturated fatty acids, preferably at least 20%.

11. A frozen confection according to any one of the preceding claims, wherein the fat blend comprises at least 20 wt% coconut oil, preferably at least 30 wt%, more preferably at least 40 wt%.

12. A frozen confection according to any one of the preceding claims, wherein the fat blend comprises at least 20 wt% rice bran oil, preferably at least 30 wt%, more preferably at least 40 wt%.

13. A frozen confection according to any one of the preceding claims, wherein the fat component comprises at least 8 wt% by weight of the triglycerides of long chain SSS triglycerides, preferably from 8 to 15wt%.

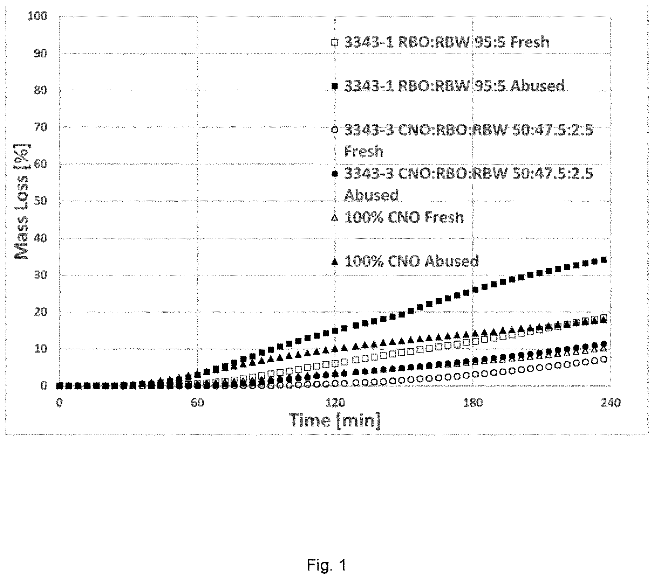

Fig. 1

## EUROPEAN SEARCH REPORT

**Application Number**

EP 24 19 6767

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/040682 A1 (AAK AB PUBL [SE]; UNIV COPENHAGEN [DK]) 27 February 2020 (2020-02-27) * claims; examples * | 1-4,7-10 | INV. A23G9/32 A23G9/42 |
| X | DANIELE C. ZULIM BOTEGA ET AL: "The Potential Application of Rice Bran Wax Oleogel to Replace Solid Fat and Enhance Unsaturated Fat Content in Ice Cream : Rice bran wax oleogel in ice cream...", JOURNAL OF FOOD SCIENCE, vol. 78, no. 9, 1 September 2013 (2013-09-01), pages C1334-C1339, XP055682384, US ISSN: 0022-1147, DOI: 10.1111/1750-3841.12175 * the whole document * | 1-4,6-10 | |
| X | CN 106 561 966 A (UNIV JIANGNAN) 19 April 2017 (2017-04-19) * claims; examples * | 1,2,4, 7-10,12 | TECHNICAL FIELDS SEARCHED (IPC) A23G |
| Y | US 2008/220141 A1 (QUAIL PATRICIA JILL [GB] ET AL) 11 September 2008 (2008-09-11) * claims; examples * | 1-13 | |
| Y | DANIELE C. ZULIM BOTEGA ET AL: "Development of Formulations and Processes to Incorporate Wax Oleogels in Ice Cream : Wax oleogel in ice cream", JOURNAL OF FOOD SCIENCE, vol. 78, no. 12, 4 November 2013 (2013-11-04), pages C1845-C1851, XP055689074, US ISSN: 0022-1147, DOI: 10.1111/1750-3841.12248 * the whole document * | 1-13 | |

The present search report has been drawn up for all claims

| Place of search | Date of completion of the search | Examiner |
|---|---|---|
| The Hague | 31 January 2025 | Bondar, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 702 847 A1**

## ANNEX TO THE EUROPEAN SEARCH REPORT
## ON EUROPEAN PATENT APPLICATION NO.

EP 24 19 6767

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | Publication date |
|---|---|---|---|
| WO 2020040682 A1 | 27-02-2020 | NONE | |
| CN 106561966 A | 19-04-2017 | NONE | |
| US 2008220141 A1 | 11-09-2008 | AT E490689 T1 | 15-12-2010 |
| | | ES 2356263 T3 | 06-04-2011 |
| | | US 2008220141 A1 | 11-09-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080220141 A1
- US 20080206425 A
- CN 106561966 A

**Non-patent literature cited in the description**

- **BOTEGA et al.** The Potential Application of Rice Bran Wax Oleogel to replace Solid Fat and Enhance Unsaturated Fat Content in Ice Cream. *J. Food Sci.*, 2013, vol. 78 (9), C1334-C1339
- **R.T. MARSHALL** ; **H.D. GOFF** ; **R.W. HARTEL**. Ice Cream. Kluwer Academic / Plenum Publishers, 2013
- **FRANK D GUNSTONE** ; **JOHN L HARWOOD** ; **ALBERT DIJKSTRA**. The Lipid Handbook. CRC Press, 2007
- **GOFF** ; **HARTEL**. Ice Cream. 2013, 60-65
- **GOFF** ; **HARTEL**. Ice Cream. 2013, 82-84
- **GOFF** ; **HARTEL**. Ice Cream. 2013, 75-82
- **GOFF** ; **HARTEL**. Ice Cream. 2013, 406
- **CLARKE**. The Science of Ice Cream. 2012
- **GUNSTONE** ; **HARWOOD** ; **DIJKSTRA**. The Lipid Handbook. 2007